# EUROPÄISCHE PATENTSCHRIFT

(11) **EP 0 903 324 B1**
(45) Veröffentlichungstag und Bekanntmachung des Hinweises auf die Patenterteilung: **17.04.2002**
(21) Anmeldenummer: 98250318.7
(22) Anmeldetag: 08.09.1998
(51) Int. Cl.: C02F 9/00, C02F 1/00, B01D 21/00, B01D 35/12

(54) **Verfahren und Anlage zur Behandlung von Wasser**
Process and installation for the treatment of water
Procédé et installation de traitement d'eau

(30) Priorität: 12.09.1997 DE 19741117
(43) Veröffentlichungstag der Anmeldung: 24.03.1999
(73) Patentinhaber: HWG Havelländische Wasser GmbH & Co. KG, 14473 Potsdam (DE)
(72) Erfinder: Gerhardt, Heinz, Dipl.-Ing., 14612 Falkensee (DE); Kelm, Siegfried, Dipl.-Ing., 14612 Falkensee (DE); Boden, Wolfram, Dipl.-Ing., 14612 Falkensee (DE); Winter, Dietmar, Dipl.-Geophys., 14612 Falkensee (DE)
(74) Vertreter: COHAUSZ HANNIG DAWIDOWICZ & PARTNER

(56) Entgegenhaltungen:
- BE-A- 833 673
- CH-A- 620 661
- DE-A- 3 800 613
- FR-A- 2 026 341

## Beschreibung

Die Erfindung betrifft ein Verfahren und eine Anlage zur Behandlung von Wasser oder Reinigung von Abwässern, bevorzugterweise deren Endreinigung, bei dem insbesondere anfallendes Klarwasser aus dem Spülschlammwasser und Erstfiltrat weitgehend rückgeführt und eine Leistungssteigerung des Filterprozesses erreicht wird.

Es ist bekannt, daß insbesondere zur Aufbereitung von Trinkbzw. Brauchwasser Rohwässer durch einen oder mehrere Filter, bevorzugterweise Kiesfilter, geleitet werden, um die im Wasser unerwünschten Begleitstoffe, wie Eisenverbindungen, Manganverbindungen u.a. zu entfernen.

Im Allgemeinen werden dabei mehrere Filter nicht gleichzeitig gespült. Nachdem das Filtermaterial sich mit den ausgeflockten Stoffen teilweise zugesetzt hat, wird dieses in bestimmten Zeitintervallen, meistens in zum Filterprozeß entgegengesetzter Richtung, gespült. Das dabei zyklisch anfallende Spülschlammwasser wird üblicherweise in ein Absetzbecken zur Sedimentation geführt und das sich bildende Klarwasser in die Kanalisation bzw. in Oberflächengewässer abgeleitet oder versickert.

Diese Verfahren haben den Nachteil, daß entweder das Spülschlammwasser bzw. der sich abgesetzte Schlamm und das sich bildende Klarwasser entsorgt werden müssen. Dieses stellt einerseits eine Belastung für die Umwelt dar und enthält andererseits Stimulatoren zur Steigerung der Filterleistung, die mit der üblichen Entsorgung verloren gehen.

Es ist aber auch bekannt, wie in der Offenlegungsschrift DE 38 00 613 beschrieben, die zyklisch anfallenden Spülschlammwässer in einen geschlossen Entsorgungsbehälter zu führen, dort den Schlamm zu sedimentieren und das gebildete Klarwasser anschließend mittels der über dem Schlammwasser komprimierten Luft über Rohrleitungen allen Filterbehältern rohwasserseitig proportional der Durchsatzmenge zuzuführen und den eingedickten Schlamm aus dem Spülwasserentsorgungsbehälter diskontinuierlich zu entfernen.

Das in der DE-OS 38 00 613 beschriebene Verfahren zeigt auf, daß das Klarwasser durch Rückführung rohwasserseitig entsorgt und somit eine zusätzliche Umweltbelastung weitgehend ausgeschlossen werden kann.

Nachteilig ist, daß diese Rückführung willkürlich in Abhängigkeit vom Füllstand des Ausgleichbehälters und des damit vorhandenen Druckes über dem Schlammwasser im Ausgleichsbehälter erfolgt.

Aufgabe der Erfindung ist es nun, das bei der Aufbereitung von Rohwasser anfallende Spülschlammwasser vom Schlamm so zu trennen, daß ein Klarwasser entsteht, dessen Rückstandsgehalt variiert werden und kontinuierlich dem Rohwasser wieder zugeführt werden kann, und daß durch die Rückführung des Klarwassers dabei eine Impfung mit Stimulatoren möglich wird und die Filtergeschwindigkeit des Rohwassers erhöht werden kann und gleichzeitig das bei der Sedimentation der Schwebstoffe aus dem Schlammwasser anfallende Klarwasser nicht separat entsorgt werden muß. Das anfallende Erstfiltrat sollte ebenfalls gleich wieder aufbereitet werden.

Diese Aufgabe wird erfindungsgemäß durch ein Verfahren und eine Anlage gemäß den kennzeichnenden Merkmalen der Hauptansprüche und deren weiteren Ausgestaltung gemäß den weiteren Ansprüchen mit seinen kennzeichnenden Merkmalen gelöst.

Zur Erreichung der vorhergehend beschriebenen und anderer Ziele und in Übereinstimmung mit dem Zweck der Erfindung beinhalten das Verfahren und die Anlage zur Behandlung von Rohwasser eine technische Lösung, bei der kein Klarwasser vom verfahrensbedingten anfallenden Spülschlammwasser aus der Reinigung der Filter entsorgt werden muß unter gleichzeitiger Erhöhung der Filterleistung.

In einer zweckmäßigen Ausbildung des Verfahrens werden die Filter mechanisch-flockulativ und/oder adsorptiv betrieben, wobei den einzelnen Rohwasserleitungen wahlweise Flockungschemikalien zugesetzt werden können.

Eine vorteilhafte Ausbildungsform des Verfahrens besteht darin, daß dem Rohwasser Luft zur Beladung mit Sauerstoff zugeführt und anschließend Klarwasser aus dem Sedimentator als Stimulator im Verhältnis von Rohwasser zu Klarwasser von 100 zu 0,5 bis 100 zu 3,0 beigemischt wird. Dieses mit Luft beladene Rohwasser mit einem Anteil an Klarwasser durchströmt einen oder mehrere Filter. Als Filtermaterial wird dabei vorteilhafterweise Kies verwendet, es sind aber auch andere Filtermaterialien möglich. Die Durchströmungsrichtung ist dabei bevorzugt von oben nach unten, also in Richtung der natürlichen Schwerkraft, so daß das Reinwasser, nachdem im Filter die ausgeflockten Verbindungen zurückgehalten werden, unten abgeführt wird.

Wenn das Filter zu einem erheblichen Teil verschlammt ist und der Filterwiderstand sich erhöht hat, wird er aus dem Filterprozeß genommen und vorzugsweise in entgegengesetzter Richtung gespült. Das Spülwasser lockert das Filtermaterial auf und nimmt die sich abgesetzten und an das Filtermaterial teilweise adsoptiv sich angelagerten Bestandteile im sogenannten Spülschlammwasser mit.
Das Spülschlammwasser wird durch eine Spülschlammleitung in einen oder in mehrere geschlossene Ausgleichsbehälter geleitet und von dort über Druckerhöhung mittels Dosiereinrichtung kontinuierlich in den unter Filtervordruck stehenden Sedimentator zwingend geführt. Die gleichzeitige Befüllung des Ausgleichbehälters ist möglich.

In einer bevorzugten Ausführungsform wird bei dem Verfahren mit einem geschlossenen Ausgleichsbehälter gearbeitet, dessen Fassungsvermögen an Spülschlammwasser mindestens die doppelte Menge einer Spülung oder das täglich anfallende Spülschlammwasser aufnehmen kann. Damit wird einmal gewährleistet, daß genügend Speicherkapazität für das zyklisch anfallende Spülschlammwasser vorhanden ist, aber auch andererseits ein genügend großer Vorrat an Spülschlammwasser, damit das Spülschlammwasser aus dem Ausgleichsbehälter kontinuierlich dem Sedimentator zugeführt werden kann.

Der Ausgleichsbehälter ist in seinem Aufbau gegenüber der Umgebung geschlossen.

Die Zuführung der Spülschlammwässer aus dem Ausgleichsbehälter in den Sedimentator erfolgt bevorzugt mittels Regeleinrichtungen, wie Pumpen mit regelbarer Förderleistung oder einfach durch Dosierventile.

Die Steuerung der Regeleinrichtung erfolgt vorzugsweise über die an einer Meßsonde ermittelten Werte der Fe³⁺ -Ionen-Konzentration im Klarwasser, welches rohwasserseitig zurückgeführt wird.

Der in diesem Verfahren einzusetzende Sedimentator hat eine geschlossene Bauweise und mehrere Einbauten zur verfahrensbedingten Zwangsumlenkung der Strömungsrichtung des Schlammwassers und steht unter Systemdruck.

Das Schlammwasser wird über eine Rohrleitung als Zulauf in das obere Drittel bis in die Mitte eines sich im Inneren des Sedimentators befindenden Einbaus geführt. Hier strömt das Spülschlammwasser aus dem Zulauf in Richtung des inneren oberen Bodens.

Sollte die Zuführung in den Sedimmentator seitlich sein, dann ist die Zulaufleitung in den Einbau des Sedimentators hineinzuführen und der Zulaufleitungsauslauf innerhalb des Einbaus ist in Richtung des oberen Abschlusses des Sedimentators gekrümmt, so daß auch hier eine Strömung in Richtung des oberen inneren Abschlusses gewährleistet ist.

Nachdem das Spülschlammwasser die Zulaufleitungsauslauföffnung im Inneren des Einbaus im Sedimentator verlassen hat, wird seine Strömungsrichtung an der Innenseite des oberen Bodens zwangsweise geändert, sie kehrt sich um. Aufgrund der Umkehr der Strömungsrichtung verharren die Partikel kurzzeitig auf einem bestimmten kinetischen Niveau, was eine erste verstärkte Agglomerierung der Schwebstoffe, insbesondere der Eisenverbindungen bewirkt. Diese bewegen sich jetzt mit der Strömung des Schlammwassers bevorzugt von unter 1 m/s und unter den Einfluß der Schwerkraft innerhalb des Einbaus im Sedimentator nach unten.

Da der Durchmesser des Einbaus im Sedimentator mindestens doppelt so groß ist, wie der innere Durchmesser der Zufuhrleitung, setzt verfahrensbedingt bereits hier eine Flockung zu größeren Agglomeraten ein.

Vorteilhaft ist es, wenn der Querschnitt des Einbaus im Sedimentator eine runde Form aufweist. Diese Form ist jedoch verfahrensmäßig nicht bedingt, jede andere Form, wie oval, oder eckig ist auch möglich.

Da der Einbau im Sedimentator von dem oberen Boden mindestens bis zur Hälfte, bevorzugt drei Viertel bis zu vier Fünftel der Länge des Sedimentators in entgegengesetzter Richtung nach unten reicht, erfolgt die zweite Umlenkung des Spülschlammwassers im Sedimentator erst am entgegengesetzten Ende des Einbaus in der Nähe des unteren Absetzboden im Sedimentator.
Nachdem das Spülschlammwasser verfahrensbedingt den Einbau im Sedimentator verlassen hat, gelangt es in den großen Absetzraum. Die Strömungsgeschwindigkeit wird wesentlich herabgesetzt und beträgt bevorzugterweise unter 0,5 m/s.

Aufgrund der erneuten Zwangsumkehr der Strömungsrichtung, des kurzzeitigen Verharrens der sich bereits gebildeten Agglomerate auf einem bestimmten Niveau mit einem Potential an kinetischer Energie und der langsamen Strömungsgeschwindigkeit flocken weitere Partikel aus bzw. agglomerieren zu größeren. Sie sinken aufgrund der Schwerkraft der Strömungsrichtung entgegen zum Absetzboden des Sedimentators und können dort kontinuierlich oder diskontinuierlich als Schlamm über einen Schlammaustrag entfernt werden.

Da der Prozeß in diesem Verfahren kontinuierlich geführt werden kann und durch Regelung des Volumenstromes durch die Dosier-Druckerhöhungs-Einrichtung, bevorzugt als Pumpe vor dem Sedimentator, kann bei einer Eisenfiltration der Anteil an Fe³⁺ -Ionen im sich bildenden Klarwasser willkürlich eingestellt und der Aufbereitungsprozeß stimuliert werden.

Das im Sedimentator sich bildende Klarwasser mit einem Gehalt an Fe³⁺ -Ionen von bis zu 35 % des Gesamt-Fe-Gehaltes wird über eine Klarwasserleitung in der Nähe, bevorzugterweise unmittelbar am inneren oberen Boden des Sedimentators außerhalb des inneren Einbaus, in der mindestens eine Öffnung zum Eintritt des Klarwassers vorhanden ist, abgeleitet.

Die Klarwasserleitung mit mindestens einer Auslauföffnung im Sedimentator besitzt vorteilhafterweise die Form einer Ringleitung, damit das Klarwasser gleichmäßig verteilt aus dem oberen Teil des Absetzraumes, der Klarwasserzone, abgeleitet werden kann.

Die Menge der Beladung des Klarwassers mit Fe³⁺ - Ionen wird gesteuert über die Verweilzeit im Sedimentator. Durch eine Verlängerung der Verweilzeit, indem dem Sedimentator weniger Spülschlammwasser in einer bestimmten Zeiteinheit zugeführt wird, wird die Fe³⁺ -Ionen Konzentration erniedrigt, bei einer Verkürzung der Verweilzeit, durch erhöhten Volumenstrom von Spülschlammwasser, dementsprechend erhöht.
Die Konzentration der Fe³⁺ -Ionen im Klarwasser wird am Ausgang des Sedimentators direkt mit eine Meßsonde festgestellt und durch die Veränderung der Durchflußmenge für den aktuellen Rohwasserstrom optimal eingestellt. Durch das Meßergebnis wird die erforderliche Menge der verfahrensbedingten Menge des zurückzuführenden Klarwassers bestimmt. Gleichzeitig wird durch die Dosier-Druckerhöhungs-Einrichtung vor dem Sedimentator die Durchflußmenge so gesteuert, daß an den Auslauföffnungen der Klarwasserleitung im Sedimentator die erforderliche Fe-Ionen Konzentration im Klarwasser vorhanden ist.

Das so erhaltene Klarwasser wird über eine Klarwasserleitung rohwasserseitig nach dem Luftzumischer dem Filterprozeß zugeführt.
Das Klarwasser mit einem Gehalt an Fe³⁺ -Ionen ist erforderlich, um den Flockulationsprozeß im Filter zu beschleunigen und die Filtergeschwindigkeit zu optimieren. Die Menge an kontinuierlich zugeführten Klarwasser mit einem Gehalt an Fe³⁺ -Ionen ist abhängig vom Fe³⁺ -Gehalt des Rohwassers und vom Fe³⁺ -Ionen Gehalt des Klarwassers sowie vom Rohwasserstrom selbst.

Die Zuführung an Klarwasser erfolgt in einer Menge, daß die optimale Filtergeschwindigkeit erreicht wird.

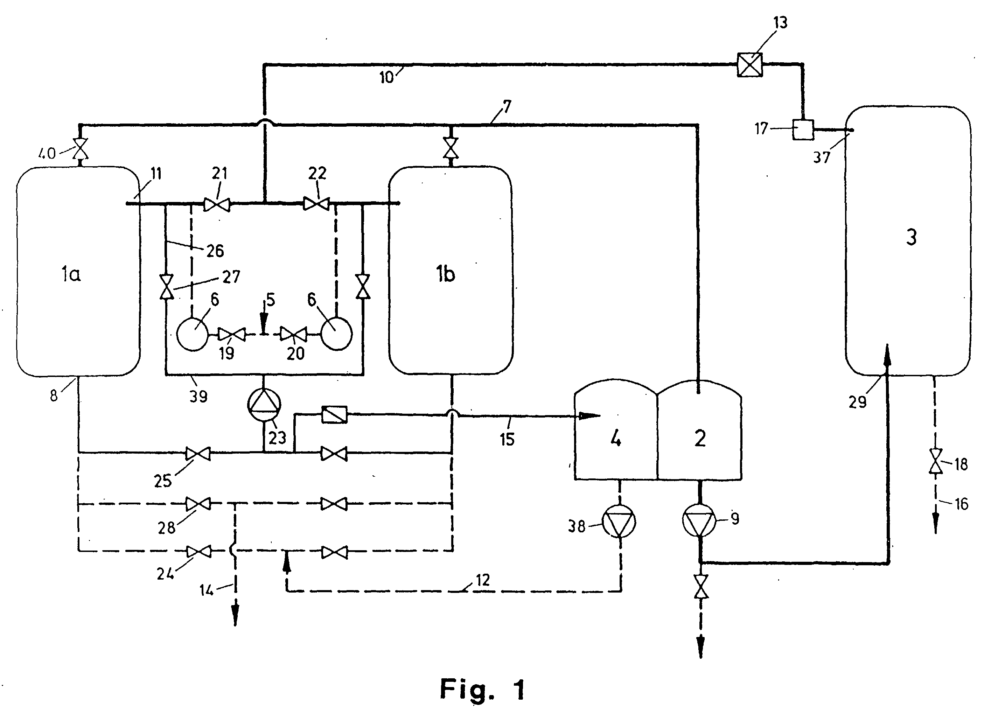

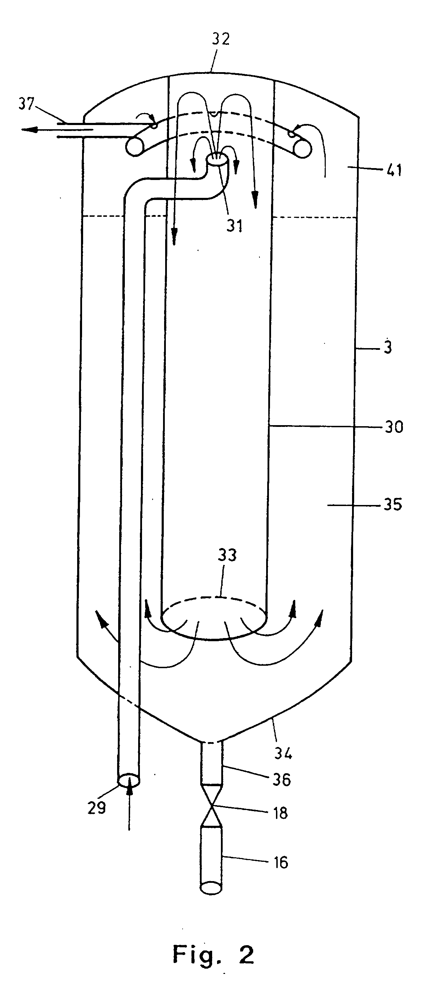

Im folgenden wird die Erfindung in einem Ausführungsbeispiel anhand der Zeichnung näher erläutert, deren Figur 1 das Technologieschema der Aufbereitungsanlage und die Figur 2 den Sedimentator im Schnitt zeigt.

In der Figur 1 sind zwei Filter 1a, 1b für die Behandlung von Rohwasser schematisch dargestellt. Die Speisung der Filter 1a, 1b erfolgt über die Rohwasserzuführung 5. Das Rohwasser wird in die Luftzufuhrmischer 6 geleitet, in welchen das Rohwasser mit Sauerstoff beladen wird. Anschließend erfolgt über die Klarwasserleitung 10 die Zumischung des Klarwassers. Dieses Wassergemisch gelangt über den Filterzulauf 11 in die Filter 1a, 1b und durchströmt z.B. den Filter 1a von oben nach unten, also in Richtung der natürlichen Schwerkraft. Das am unteren Ende des Filters 1a anfallende Reinwasser wird über die Reinwasserleitung 14 bei geöffneter Absperreinrichtung 28 abgeführt. Wenn der Filter 1a verschlammt ist und die Filterleistung nicht mehr ausreichend groß ist, werden die Absperreinrichtung 19 für die Rohwasserzuführung 5, die Absperreinrichtung 21 für die Zuführung des Klarwassers 10 und die Absperreinrichtung 28 für die Reinwasserentnahme 14 geschlossen. Die Absperreinrichtungen 20 und 22 für die Beschickung des Filters 1b bleiben geöffnet.

Während der Filter 1b in den Aufbereitungsprozeß eingebunden bleibt, wird der Filter 1a entgegen der Filterrichtung gespült. Das Spülwasser kann wie üblich bereitgestellt werden, sowohl wie hier im Beispiel mittels Pumpe 38 aus dem Spülwasserbehälter 4 als auch geregelt aus der Reinwasserleitung 14 . Das Spülwasser lockert dabei das Filtermaterial im Filter 1a auf, nimmt den ausgeflockten und/oder adsorptiv angelagerten Schlamm mit und das dabei anfallende Spülschlammwasser wird nach Öffnen der Absperreinrichtung 40 über die Spülschlammleitung 7, dem Ausgleichsbehälter 2 mittels Dosier-Druckerhöhungs-Einrichtung 9 dem Sedimentator 3 zugeführt.

Nachdem der Spülvorgang des Filters 1a beendet ist, wird die Absperreinrichtung 40 der Spülschlammleitung 7 geschlossen, die Absperreinrichtung 19 geöffnet und der Filter 1a wieder mit Rohwasser beschickt, wobei das Erstfiltrat nach dem Spülvorgang über die Erstfiltratablaufleitung 15 in den Spülwasserbehälter 4 geleitet wird oder durch Öffnen der Absperreinrichtung 27 über die Erstfiltratleitung 39 dem Filterprozeß mittels Druckerhöhungseinrichtung 23 wieder zugeführt wird. Nachdem das Erstfiltrat den Filter 1a verlassen hat, wird die Absperreinrichtung 25 geschlossen und die Absperreinrichtung 28 der Reinwasserleitung 14 geöffnet. Dieser Vorgang erfolgt immer im Wechsel mit den beiden Filtern 1a und 1b, so daß das Spülschlammwasser zyklisch anfällt.

Durch das erfindungsgemäße technologische Modul bestehend aus Ausgleichsbehälter 2, Dosier-Druckerhöhungs-Einrichtung 9 und Drucksedimentator 3 wird das drucklos diskontinuierlich anfallende Spülschlammwasser in prozeßbeschleunigendes mit Systemdruck versehenes Kreislaufwasser umgewandelt.

Die Zulaufleitung 29 ist in dem Drucksedimentator 3 bis oben seitlich angeordnet und ist bis zur Mitte des Einbaus 30 geführt. Hier ist die Zulaufleitung 29 nach oben gelenkt, so daß die Zulaufleitungsausflußöffnung 31 nach oben gerichtet ist. Das Spülschlammwasser strömt in Richtung des inneren oberen Bodens 32, wird dort in seiner Strömungsrichtung umgelenkt und strömt nun mit den zum Teil sich bereits gebildeten Schlammpartikeln innerhalb des Einbaus 30 nach unten bis zur Öffnung 33 des Einbaus 30.
Die Strömungsgeschwindigkeit im Einbau 30 beträgt weniger als 1 m/s.

Die Öffnung 33 befindet sich dabei in einer Höhe von einem Fünftel der Gesamthöhe des Sedimentators 3 von dem unteren Absetzboden 34 entfernt. Hier wird das Spülschlammwasser in der Strömungsrichtung erneut umgelenkt und strömt nun mit weniger als 0,5 m/s innerhalb des Absetzraumes 35 nach oben, in dem die agglomerierten Eisenverbindungen als Schlamm langsam zum Absetzboden 34 sinken. Der abgesetzte Schlamm wird über einen Schlammaustrag 36 entfernt. Die Menge läßt sich dabei steuern über eine Absperreinrichtung 18.

Das Klarwasser, welches in Abhängigkeit von der Verweilzeit im Sedimentator mit Fe³⁺ - Ionen beladen ist, wird über einen Klarwasserauslauf 37 in der Nähe des inneren oberen Bodens 32 aus der Klarwasserzone 41 des Absetzraumes 35 abgeführt. Durch die Meßsonde 17 erfolgt die Bestimmung des Gehaltes an Fe³⁺ - Ionen im Klarwasser, damit über die Klarwasserleitung 10 der Volumenstrom Klarwasser dem Rohwasser nach dem Luftmischer 6 dem Filterprozeß in den Filtern 1a und 1b zugeführt wird, mit dem der Fe³⁺ - Ionengehalt am Filterzulauf 11 in dem gewünschten Verhältnis zur Gesamtmenge des Fe-Ionengehaltes steht, wobei der Gesamtgehalt an Eisen zwischen 4 und 15 mg/l liegt.

Durch die ermittelten Daten der Meßsonde 17 wird die Dosier-Druckerhöhungs-Einrichtung 9 geregelt, wodurch der Volumenstrom der Zuführung von Spülschlammwasser in den Sedimentator 3 und damit die Konzentration an Fe³⁺ - Ionen im Klarwasser bestimmt wird.

Das Klarwasser wird durch den UV-Strahler 13 zusätzlich desinfiziert.
Als Absperreinrichtungen wurden Schieber eingesetzt. Es sind aber auch andere, wie Ventile usw. möglich.

### Aufstellung der verwendeten Bezugszeichen:

1a, 1b Filter
2 Ausgleichsbehälter
3 Sedimentator
4 Spülwasserbehälter
5 Rohwasserzuführung
6 Luftzumischer
7 Spülschlammleitung
8 Filterauslauf
9 Dosier-Druckerhöhungs-Einrichtung
10 Klarwasserleitung
11 Filterzulauf
12 Spülwasserleitung
13 UV-Strahler
14 Reinwasserleitung
15 Erstfiltratablaufleitung
16 Schlammentsorgungsleitung
17 Meßsonde
18 Absperreinrichtung Schlamm
19 Absperreinrichtung Rohwasser Filter 1a
20 Absperreinrichtung Rohwasser Filter 1b
21 Absperreinrichtung Klarwasser Filter 1a
22 Absperreinrichtung Klarwasser Filter 1b
23 Druckerhöhungseinrichtung
24 Absperreinrichtung Spülwasser
25 Absperreinrichtung Erstfiltratleitung
26 Erstfiltratsteigleitung
27 Absperreinrichtung Erstfiltratleitung
28 Absperreinrichtung der Reinwasserleitung
29 Zulaufleitung Sedimentator
30 Einbau Sedimentator
31 Zulaufleitungsauslauföffnung
32 oberer Boden
33 Öffnung Einbau
34 Absetzboden
35 Absetzzone
36 Schlammaustrag
37 Klarwasserauslauf
38 Pumpe
39 Erstfiltratleitung
40 Absperreinrichtung Spülschlammleitung
41 Klarwasserzone

## Patentansprüche

1. Verfahren zur Behandlung von Wässern durch Filtration der Rohwässer in einem oder mehrere Filter ( 1a, 1b ), Spülung der Filter ( 1a, 1b ) und leiten des zyklisch anfallendes Spülschlammwassers in mindestens einen geschlossenen Ausgleichbehälter ( 2 ) mit anschließender Druckerhöhung und Sedimentation der Schlammwässer in einem Sedimentator mit Absetzzone ( 35 ), Absetzboden ( 34 ), Schlammaustrag ( 36 ) und Rückführung des Klarwassers,
**dadurch gekennzeichnet, daß** die Spülschlammwässer mindestens in einen geschlossenen unter Systemdruck stehenden Sedimentator ( 3 ) so geführt werden, daß diese eine zweifache Umkehr der Strömungsrichtung und Geschwindigkeitsänderung erhalten und das Klarwasser mit einem Gehalt an Fe³⁺ -Ionen von 5 mg/l bis 50 mg/l kontinuierlich rohwasserseitig wieder in einer Menge zugeführt wird, daß am Filterzulauf ( 11 ) nach Zuführung des Rohwassers der Gesamtgehalt Fe₂/Fe₃ 0,5 mg/l bis 15 mg/l vor den Filtern ( 1 ) beträgt, wobei der Systemdruck in der gesamten Anlage annähernd gleich ist und anfallendes Erstfiltrat nach Beendigung des Filterspülvorganges in einem Spülwasserbehälter ( 4 ) zwischengespeichert oder über die Druckerhöhungseinrichtung ( 23 ) rohwasserseitig zugeführt wird.

2. Verfahren nach Anspruch 1,
**dadurch gekennzeichnet, daß** aus dem zyklisch anfallendem Spülschlammwasser ein kontinuierlicher Kreislaufstrom wird.

3. Verfahren nach Anspruch 1,
**dadurch gekennzeichnet, daß** der Sedimentator ( 3 ) unter Systemdruck steht.

4. Verfahren nach Anspruch 1,
**dadurch gekennzeichnet, daß**
das Klarwasser nach dem rohwasserseitigen Luftzumischer ( 6 ) eingeleitet wird.

5. Verfahren nach Anspruch 1 und 2,
**dadurch gekennzeichnet, daß** die Einstellung der Fe³⁺ - Ionen-Konzentration im Klarwasser durch Veränderung der Fließgeschwindigkeit oder Verweildauer im Sedimentator ( 3 ) erfolgt.

6. Verfahren nach Anspruch 1, 2 und 5,
**dadurch gekennzeichnet, daß**
bei zu geringer Fe³⁺ - Ionen-Konzentration im Klarwasser die Fließgeschwindigkeit zur Verringerung der Sedimentation erhöht wird.

7. Verfahren nach Anspruch 1, 2, 5 und 6
**dadurch gekennzeichnet, daß** mit dem Kreislaufstrom die Filterleistung stimuliert wird.

8. Verfahren nach Anspruch 1,
**dadurch gekennzeichnet, daß** das Klarwasser zur Desinfektion mit UV-Licht bestrahlt wird.

9. Anlage zur Aufbereitung von Wässern mit einem oder mehreren Filtern, Ausgleichsbehältern, Sedimentatoren, Dosiereinrichtungen, Absperreinrichtungen, Leitungen und Einrichtungen zur Messung und Steuerung der Fe-Ionen-Konzentration bei der Filter ( 1a, 1b ), ein oder mehrere geschlossene Ausgleichsbehälter ( 2 ) mit Druckausgleich, Dosier-Druckerhöhungs-Einrichtung ( 9 ) und ein oder mehrere Sedimentatoren ( 3 ) mit doppelter Zwangsumlenkung der Strömungsrichtung so angeordnet sind, daß sie mit den Klarwasserückführleitungen ( 10 ), die nach den Luftzumischern ( 6 ) einmünden einen Kreislaufprozeß bilden und die Erstfiltratsteigleitung ( 26 ) zwischen Filterausgang ( 8 ) und Filtereingang ( 11 ) so angeordnet ist, daß die Filter über die Druckerhöhungseinrichtung ( 23 ) mit Erstfiltrat gespeist werden.

10. Anlage nach Anspruch 9,
**dadurch gekennzeichnet, daß** der Ausgleichsbehälter ( 2 ) mit einer oder mehreren Dosier-Druckerhöhungs-Einrichtungen ( 9 ) ausgerüstet ist.

11. Anlage nach Anspruch 9,
**dadurch gekennzeichnet, daß** der Ausgleichsbehälter ( 2 ) mindestens die Menge Spülschlammwasser von einem Spülzyklus aufnehmen kann.

12. Anlage nach Anspruch 9,
**dadurch gekennzeichnet, daß** die Dosier-Druckerhöhungs-Einrichtung ( 9 ) zur Regelung der Zuflußmenge zum Sedimentator ( 3 ) dient.

13. Anlage nach Anspruch 9 und 12,
**dadurch gekennzeichnet, daß** die Dosier-Druckerhöhungs-Einrichtung ( 9 ) bevorzugt eine Pumpe ist, die die Druckerhöhung besorgt.

14. Anlage nach Anspruch 9,
**dadurch gekennzeichnet, daß** in dem Sedimentator ( 3 ) Einbauten ( 30, 31 ) angeordnet sind.

15. Anlage nach Anspruch 10 und 14,
**dadurch gekennzeichnet, daß** die Querschnitte der Einbauten ( 30, 31 ) im Sedimentator ( 3 ) bevorzugt eine runde Form aufweisen.

## Claims

1. Method for treatment of waters through filtration of the raw water in one or several filters (1a, 1b ), wash the filters (1a, 1b ) and to lead of the cyclical be obtained as a washing sludge water into at least a closed compensor ( 2 ) with afterwards increase in pressure and settling zone ( 35 ), settling bottom ( 34 ), sludge removal ( 36 ) and return of the clear water,
**characterized in that**, the washing sludge waters will lead at least in a closed under system pressure standing sedimentator ( 3 ), that this obtain a double turning back of the movement of direction and a change for the speed and the clear water is supply again in a amount with a content of Fe³⁺-ions between about 5 mg/l and 50 mg/l continuous from the side of raw water, that on the filter intake ( 11 ) is after supply of the raw water is a total content Fe₂/Fe₃ between about 0,5 mg/l and 15 mg/l before the filters, where the system pressure is in the total equipment approximately same and be obtained a first filtrat is interim storing after finish of the filter wash processes in a wash water container ( 4 ) or supply about in an increase in pressure equipment ( 23 ) from the side of raw water.

2. Method according to claim 1, **characterized in that,**
from the cyclical formed washing sludge water being a continuous circulation stream.

3. Method according to claim 1, **characterized in that,**
the sedimentator stands under system pressure.

4. Method according to claim 1, **characterized in that,**
the clear water is leaded after the side of raw water to mixer of air.

5. Method according to claims 1 and 2, **characterized in that,**
the setting successful the concentration of Fe³⁺-ions in the clear water through the change of the flowspeed or the length of stay in the sedimentor (3).

6. Method according to claims 1, 2 and 5, **characterized in that,**
by to small concentration of Fe³⁺-ions in the clear water be increase the flowspeed to reduction by the sedimentation.

7. Method according to claims 1, 2, 5 and 6, **characterized in that,**
with the circulationstream be stimulate the filter power.

8. Method according to claim 1, **characterized in that,**
the clear water be treat with U/V-ligth to the desinfection.

9. Plant for treatment of water with one or several filters, compensors,
sedimentators, dosings, electronic tubes, conduites and apparatus to the measurement and controls the concentration of Fe-ions by the filters ( 1a, 1b ), one or several closed compensor ( 2 ) with pressure balance, dosing-booster ( 9 ) and one or several sedimentators ( 3 ) with double forced-circulation of the direction of the current is so location, that she constitut a recycle process with the clear water recirculation conducts ( 10 ), the intersection after the mixer of air and the primary filtrat rising mains ( 26 ) is location between filter exit ( 8 ) and filter intake ( 11 ), that the filter is supply over the booster ( 23) with primery filtrat.

10. Plant according to claim 9, **characterized in that,**
the compensor ( 2) contained one or several dosing booster ( 9 ).

11. Plant according to claim 9, **characterized in that,** the
compensor ( 2) can pick up slightest a amount washwater of a wash cyclus.

12. Plant according to claim 9, **characterized in that,**
the dosing booster ( 9 ) is to regulation of the rate of flow to sedimentator (3).

13. Plant according to claims 9 and 12, **characterized in that,**
the dosing booster ( 9 ) is prefer a pump, the worried the presser raising.

14. Plant according to claims 9 and 12, **characterized in that,**
in the sedimentator ( 3 ) befinded installations ( 30, 31).

15. Plant according to claims 9 and 12, **characterized in that,**
the incross section of the installation ( 30, 31 ) in the sedimentator ( 3 ) show prefer a cicle form.

## Revendications

1. Procédé pour le traitement d'eaux par filtration des eaux brutes dans un filtre ou dans plusieurs filtres ( 1a, 1b ), rinçage des filtres ( 1a, 1b ), et conduite de l'eau de boue de rinçage se présentant cycliquement dans au moins un récipient de compensation fermé ( 2 ) avec augmentation subséquente de la pression et sédimentation des eaux de boue dans un sédimentateur avec zone de dépose (35 ), fond de dépose ( 34 ), évacuation de boue ( 36 ) et repasse de l'eau décantée, **caractérisé en ce que** les eaux de boue de rinçage sont conduites dans au moins un sédimentateur ( 3 ) fermé et se trouvant sous pression du système que celles-ci sont soumises à un retour double de la direction du courant et de la variation de la vitesse et que l'eau décantée est ramenée de manière continue du côté eau brute avec une teneur en ions Fe³⁺ de 5 mg/l à 50 mg/l dans une quantité que la teneur totale de Fe₂/Fe₃ en amont des filtres ( 1 ) s'élève à 0,5 mg/l jusqu'à 15 mg/l à l'entrée des filtres ( 11 ) après l'arrivée de l'eau brute, la pression du système étant sensiblement égale dans la totalité de l'installation et que du produit de filtrage premier soit entreposé dans un récipient d'eau de rinçage ( 4 ) après la fin de l'opération de rinçage du filtre ou amené au côté eau brute par l'intermédiaire du dispositif d'augmentation de la pression ( 23 ).

2. Procédé suivant la revendication 1, **caractérisé en ce que** les eaux de boue de rinçage se présentant cycliquement se changent en courant de circuit continu.

3. Procédé suivant la revendication 1, **caractérisé en ce que** le sédimentateur ( 3 ) se trouve sous la pression du système.

4. Procédé suivant la revendication 1, **caractérisé en ce que** l'eau décantée est amenée en aval du mélangeur d'ajutage d'air ( 6 ) du côté de l'eau brute.

5. Procédé suivant les revendications 1 et 2, **caractérisé en ce que** l'ajustage de la concentration des ions Fe³⁺ dans l'eau décantée s'effectue par la modification de la vitesse de passage ou de la durée de séjour dans le sédimentateur ( 3 ).

6. Procédé suivant les revendications 1, 2 et 5, **caractérisé en ce que** pour une concentration trop faible des ions Fe³⁺ dans l'eau décantée, la vitesse de passage est augmentée pour la réduction de la sédimentation.

7. Procédé suivant les revendications 1, 2, 5 et 6, **caractérisé en ce que** le débit de filtrage est stimulé par le courant du circuit.

8. Procédé suivant la revendication 1, **caractérisé en ce que** l'eau décantée est soumise à la lumière UV.

9. Installation pour le traitement d'eaux avec un ou plusieurs filtres, récipients de compensation, sédimentateurs, dispositifs de dosage, organes de blocage, conduites et instruments pour le mesurage et la commande de concentration des ions Fe où des filtres ( 1a, 1b ),, un ou plusieurs récipients de compensation fermés ( 2 ) à égalisation de la pression, un dispositif de dosage et d'augmentation de la pression ( 9 ) et un ou plusieurs sédimentateurs ( 3) à dérivation forcée double de la direction du courant sont disposés de manière à former un processus de circuit avec les conduites de retour de l'eau décantée ( 10) qui débouchent sur les mélangeurs d'ajutage d'eau ( 6 ), et que la conduite de refoulement du produit de filtration primaire ( 26 ) entre la sortie de filtration ( 8 ) et l'entrée de filtration ( 11 ) soit disposée de manière à ce que les filtres soient alimentés du produit de filtrage primaire par l'intermédiaire du dispositif d'augmentation de la pression ( 23 ).

10. Installation suivant la revendication 9, **caractérisée en ce que** le récipient de compensation ( 2 ) est équipé d'un dispositif d'augmentation de dosage et de pression (9).

11. Installation suivant la revendication 9, **caractérisée en ce que** le récipient de compensation ( 2 ) peut recevoir au moins la quantité d'eau de boue de rinçage d'un cycle de rinçage.

12. Installation suivant la revendication 9, **caractérisée en ce que** le dispositif d'augmentation de dosage et de pression ( 9 ) sert au réglage de la quantité d'amenée au sédimentateur (3).

13. Installation suivant les revendications 9 et 12, **caractérisée en ce que** le dispositif d'augmentation de dosage et de pression ( 9) est de préférence une pompe réalisant l'augmentation de la pression.

14. Installation suivant la revendication 9, **caractérisée en ce que** des organes incorporés ( 30, 31 ) sont disposés dans le sédimentateur ( 3 ).

15. Installation suivant les revendications 10 et 14, **caractérisée en ce que** les sections des organes incorporés ( 30, 31 ) dans le sédimentateur ( 3 ) présentent de préférence une forme ronde.
